# EUROPÄISCHE PATENTSCHRIFT

(11) **EP 3 611 412 B1**
(45) Veröffentlichungstag und Bekanntmachung des Hinweises auf die Patenterteilung: **17.02.2021**
(21) Anmeldenummer: 19190157.8
(22) Anmeldetag: 06.08.2019
(51) Int. Cl.: F16K 27/02, F01N 3/20, F16K 31/06

(54) **VENTIL MIT SCHUTZEINRICHTUNG**
VALVE WITH PROTECTIVE DEVICE
SOUPAPE POURVUE DE DISPOSITIF DE PROTECTION

(30) Priorität: 17.08.2018 DE 102018120078
(43) Veröffentlichungstag der Anmeldung: 19.02.2020
(73) Patentinhaber: Thomas Magnete GmbH, 57562 Herdorf (DE)
(72) Erfinder: Jung, David, 57290 Neunkirchen (DE); Dietz, Janik, 56472 Hof (DE)

(56) Entgegenhaltungen:
- WO-A1-2010/051823
- DE-A1- 10 147 172
- DE-A1-102004 025 062
- DE-A1-102010 019 821
- DE-A1-102010 039 052
- DE-B3-102011 111 938

## Beschreibung

### Beschreibung

Die Erfindung betrifft ein Ventil, das einen Elektromagneten, einen Einlass, einen Auslass, ein Gehäuse und ein von einem Anker des Elektromagneten mechanisch betätigtes Fluidsteuermittel aufweist, wobei das Fluidsteuermittel einen ersten, mit dem Einlass fluidisch verbundenen ersten Druckraum mit einem zweiten, mit dem Auslass fluidisch verbundenen Druckraum in Abhängigkeit von der Betätigung durch den Anker des Elektromagneten fluidisch verbindet, und wobei der Elektromagnet einen dritten Druckraum aufweist.
Ventile dieser Gattung sind bekannt und werden zur Steuerung des Durchflusses von Gasen und/oder Flüssigkeiten eingesetzt.
Besondere Anforderungen werden an solche Ventile gestellt, die mit Flüssigkeiten zusammenwirken, die unter den bestimmungsgemäßen Betriebsbedingungen einfrieren können und dabei eine Vergrößerung ihres Volumens zeigen.
Solche Ventile müssen gegen die Wirkung dieser Volumenvergrößerung bei gleichzeitigem Leitungsverschluss geschützt werden.
Die Druckschrift DE 20 2013 011 667 zeigt eine Dosierpumpe mit einer Schutzeinrichtung zum Einsatz mit einfrierenden Flüssigkeiten.

Die DE 10 2010 019 821 A1 offenbart eine Dosierpumpe. Durch einen Magneten angetriebene und zum Fördern einer Flüssigkeit dienende Hubkolbenpumpe mit zwei Verdrängerräumen, die durch ein erstes Ventil miteinander verbunden sind, von denen der erste Verdrängerraum mit einer Saugleitung verbunden ist und der zweite Verdrängerraum zusätzlich durch ein zweites Ventil mit einer Druckleitung verbunden ist. Der erste zylinderförmige Verdrängerraum ist in seiner ganzen oder überwiegenden Länge nach außen durch eine schlauchförmige Membran aus einem hochelastischen nichtmetallischen Werkstoff begrenzt, die ihrerseits von der Magnetspule der Hubkolbenpumpe umgeben ist. Die Membran ist hinsichtlich ihres Außendurchmessers, ihrer Dicke und ihrer Abstützung so bemessen, dass sie bei den üblicherweise vorliegenden mittleren Drücken in dem Verdrängerraum nicht vollflächig an der Magnetspule anliegt.

Die DE 10 2010 039 052 A1 offenbart eine eisdruckfeste Einspritzvorrichtung für ein Fluid, die auch durch gefrierendes und sich im Volumen ausdehnendes Fluid nicht beschädigt wird. Die eisdruckfeste Einspritzvorrichtung hat eine Ventilnadel, eine steifen Ventilhülse, welche die Ventilnadel derart umgibt, das zwischen der Ventilnadel und der Ventilhülse ein Ventilnadelraum ausgebildet ist, und ein Kompensationselement, welches wenigstens einen flexiblen Bereich aufweist. Das Kompensationselement ist derart im Ventilnadelraum angeordnet, dass es den Ventilnadelraum in einen im Betrieb mit Fluid gefüllten Einspritzraum und in einen mit Gas gefüllten Kompensationsraum, der einerseits von der Ventilhülse und andererseits von dem Kompensationselement begrenzt ist, unterteilt. Wenigstens ein Bereich des Kompensationselements ist flexibel ausgebildet und ermöglicht eine Veränderung der Volumina des Einspritzraumes und des Kompensationsraumes, um eine Volumenzunahme gefrierenden Fluids im Einspritzraum auszugleichen.

Die DE 10 2004 025 062 A1 offenbart ein gefriertaugliches Dosierventil, das im Automobilbau, insbesondere Nutzfahrzeugbau, verwendet werden kann. Das gefriertaugliche Dosierventil ist besonders für Abgasnachbehandlungs- bzw. Auspuffsysteme geeignet. Es handelt sich um ein gefriertaugliches Dosierventil, welches einen Magnetteil und einen Hydraulikteil umfasst. Der Magnetteil hat einen durch eine Feder vorgespannten Anker. Der Hydraulikteil hat einen Ringraum zur Aufnahme und Weiterleitung einer Flüssigkeit. Ebenso hat der Hydraulikteil einen in einen Ventilsitz weisenden Stößel. Hierbei hat der Ventilsitz eine Düsenöffnung an der Seite, die dem Stößel abgewendet ist. Im umbestromten Zustand versperrt der Stößel den Ringraum in Richtung einer Öffnung (Düsenöffnung). Dies passiert so lange, bis der Gefrierdruck auf den Anker durch die sich verfestigende Flüssigkeit eine ausreichende Kraft erzeugt. Mit der Kraft wird entgegengewirkt, bis durch eine Entlastungsbewegung ein Gefrierdehnungsraum geschaffen wird.

Die WO 2010/051 823 A1 offenbart ein frostsicheres Magnetventil. Das Magnetventil umfasst ein Ankerrohr innerhalb einer Spulenanordnung, eine Ankerhülse, ein in dem Ankerrohr angeordnetes Polstück und einen Anker, der so konfiguriert ist, dass er sich innerhalb der in dem Ankerrohr angeordneten Ankerhülse hin- und herbewegt. Der Anker ist so konfiguriert, dass er sich in der Ankerhülse unter dem Einfluss der Spulenanordnung zu einem Ventilsitz hin und von diesem weg bewegt.

Es ist Aufgabe der vorliegenden Erfindung, einen sicheren Schutz des Ventils vor der Wirkung der Volumenvergrößerung infolge eines Einfrierens des Fluids zu erzeugen, der nicht nur einmalig wirkt, sondern eine in einer Spezifikation festgelegte Anzahl (beispielsweise >30) von Einfrierzyklen übersteht.

Die Lösung dieser Aufgabe erfolgt durch die kennzeichnenden Merkmale des ersten Anspruchs.
Die Erfindung schließt die technische Lehre ein, dass der Elektromagnet einen Magnetpol aufweist, der mit dem Anker magnetisch zusammenwirkt, wobei der Magnetpol von einem zweiten Federmittel axial abgestützt ist, und wobei der Magnetpol durch einen Druck in dem dritten Druckraum, der größer ist als ein zweiter vorbestimmter Grenzdruck p_{g2}, gegen die Kraft eines zweiten Federmittels in die Richtung des zweiten Federmittels elastisch verschiebbar ist.

Der dritte Druckraum des Ventils ist hohlzylindrisch und ist innen an der Zylinderfläche mit einer Membran ausgekleidet, die von einer Abstützung mindestens teilweise umfasst ist, wobei die Abstützung aus einem hohlzylindrischen Körper besteht, der in dem Elektromagneten gelagert ist.

Vorteilhafterweise ist die Abstützung in einer Kunststoffumspritzung einer Magnetspule gelagert, wobei die Kunststoffumspritzung und die Magnetspule Teile des Elektromagneten sind. Dabei kann die Abstützung auch stoffschlüssig mit der Kunststoffumspritzung verbunden sein.

Die Abstützung weist in einer ersten vorteilhaften Ausführung auf ihrer der Membran zugewandten Oberfläche eine Mehrzahl von Vertiefungen und zwischen den Vertiefungen eine entsprechende Zahl von Rippen auf, die die Membran abstützen. Bei einer Erhöhung des Drucks in dem dritten Druckraum wird die Membran stellenweise in die Vertiefungen gedrückt und das Volumen des dritten Druckraums wird dadurch vergrößert.

Die Rippen und die Vertiefungen sind so bemessen, dass die Membran sich nur elastisch verformt, wenn sie sich unter dem Einfluss des Innendrucks an die Vertiefungen anlegt.

Dabei verlaufen die Rippen entweder axial relativ zu dem dritten Druckraum, oder sie verlaufen umlaufend relativ zu dem dritten Druckraum. Die Membran dichtet den dritten Druckraum gegen die Umgebung ab, und die ebenfalls axial oder umlaufend verlaufenden Vertiefungen sind miteinander und mit der Umgebung außerhalb des Gehäuses fluidisch verbunden.

In einer zweiten Ausführung besteht die Abstützung aus einem Schaumkörper, der eine Mehrzahl von Hohlräumen aufweist, die elastisch komprimierbar sind. Der Schaumkörper wird von der Kunststoffumspritzung des Elektromagneten abgestützt, wobei deren innere abstützende Fläche auch Vertiefungen und Rippen aufweisen kann.

Vorteilhafterweise ist der dritte Druckraum mit dem zweiten Druckraum durch eine Abflachung oder eine Nut an dem Anker fluidisch verbunden. Damit wird der zweite Druckraum indirekt geschützt, weil Fluid von dem zweiten Druckraum in den geschützten dritten Druckraum übertreten kann.

Das Fluidsteuermittel enthält vorzugsweise einen Ventilsitz und einen darin zeitweise ruhenden Dichtkörper, wobei der Dichtkörper kraft- oder form- oder stoffschlüssig mit dem Anker verbunden ist.

In einer vorteilhaften Ausführung öffnet bei einem Druck im ersten Druckraum, der höher ist als ein vorbestimmter Grenzwert Δ_{pg}, der Druck das Fluidsteuermittel gegen die auf den Anker wirkende Kraft eines ersten Rückstellfedermittels, so dass das Fluid in den benachbarten zweiten Druckraum abfließen kann. Der Grenzwert Δ_{pg} ist durch die Vorspannung des ersten Rückstellfedermittels so eingestellt, dass die Kraft des Elektromagneten diesen Grenzwert überwinden kann, um das Ventil gesteuert zu öffnen. Bei einem Einfrieren des Fluids im ersten Druckraum entsteht ein so hoher Druck, dass die Kraft des ersten Rückstellfedermittels jedenfalls überwunden wird.

Die Membran ist bei der Ausführung der Abstützung mit den Rippen und ohne Schaumkörper vorzugsweise hinsichtlich ihrer Dicke und ihrer Steifigkeit so ausgelegt, dass sie bei einer Druckerhöhung in dem Druckraum, den sie umfasst, in die Vertiefungen elastisch eindringt und bei einer späteren Absenkung des Drucks wieder die Form annimmt, die sie vor der Druckerhöhung hatte. Wegen der nur elastischen Verformung kann die Membran eine große Zahl von Einfrierzyklen ertragen.

Das Ventil weist eine zweite Schutzeinrichtung auf, die daraus besteht, dass ein den dritten Druckraum begrenzender Magnetpol von einem zweiten Federmittel axial abgestützt ist, wobei der Magnetpol durch einen Druck in dem dritten Druckraum, der größer ist als ein zweiter vorbestimmter Grenzdruck p_{g2}, gegen die Kraft des zweiten Federmittels in die Richtung des zweiten Federmittels verschiebbar ist.

Der zweite Grenzdruck p_{g2} ist durch die Federvorspannung des zweiten Federmittels so vorbestimmt, dass im bestimmungsgemäßen Betrieb ohne Einfrieren des Fluids der Magnetpol in seiner durch die Federvorspannung bestimmten Ruhelage verbleibt und dass nur bei einem Einfrieren des Fluids der dann auftretende außergewöhnlich hohe Druck die Kraft der Federvorspannung überwinden kann.

Dabei ist das zweite Federmittel vorteilhafterweise an dem Gehäuse abgestützt, und ein Raum auf der von dem Fluidsteuermittel abgewandten Seite des Magnetpols ist mit der Umgebung des Ventils fluidisch verbunden.

Das zweite Federmittel besteht vorzugsweise aus mindestens einer Tellerfeder und ist vorteilhafterweise hinsichtlich seiner Federvorspannung einstellbar.

Weitere Einzelheiten, Merkmale und Vorteile der Erfindung ergeben sich aus nachfolgender Beschreibung anhand der Zeichnung.

Es zeigt:
- Figur 1: eine Darstellung des Ventils im Längsschnitt mit einer Membran als Schutzeinrichtung ohne den erfindungsgemäßen verschieblichen Magnetpol,
- Figur 2: eine Schnittdarstellung senkrecht zur Mittelachse, gezeigt ist nur die Membran ohne Druckbeaufschlagung und ihre Abstützung durch Rippen,
- Figur 3: eine weitere Schnittdarstellung senkrecht zur Mittelachse der in die Vertiefungen eingedrungenen Membran mit Druckbeaufschlagung,
- Figur 4: eine weitere Schnittdarstellung senkrecht zur Mittelachse der Membran und des abstützenden Schaumkörpers,
- Figur 5: eine weitere Darstellung des Ventils im Längsschnitt mit einem verschieblichen Magnetpol als Schutzeinrichtung, die Membran wird hier nicht gezeigt.

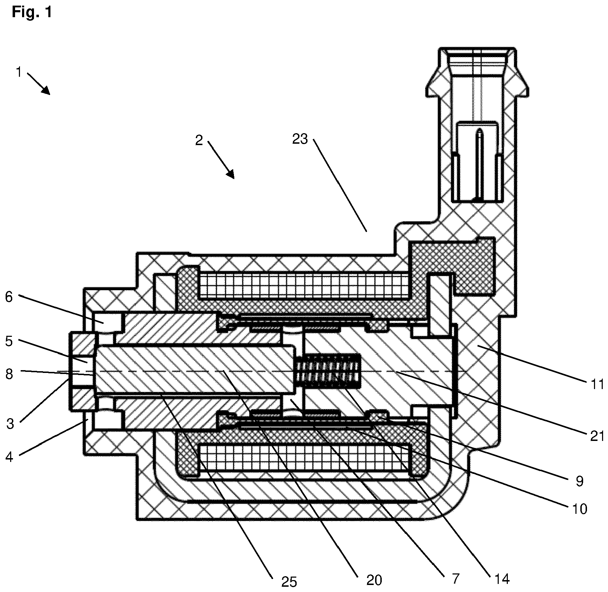

Figur 1 zeigt eine erfindungsgemäße Ausführung des Ventils (1), das einen Elektromagneten (2), einen Einlass (3), einen Auslass (4), ein Gehäuse (11) und ein von einem Anker (20) des Elektromagneten (2) mechanisch betätigtes Fluidsteuermittel (8) aufweist.

Das Fluidsteuermittel (8) verbindet einen ersten, mit dem Einlass (3) fluidisch verbundenen Druckraum (5) mit einem zweiten, mit dem Auslass (4) fluidisch verbundenen Druckraum (6) in Abhängigkeit von der Betätigung durch den Anker (20) des Elektromagneten (2).

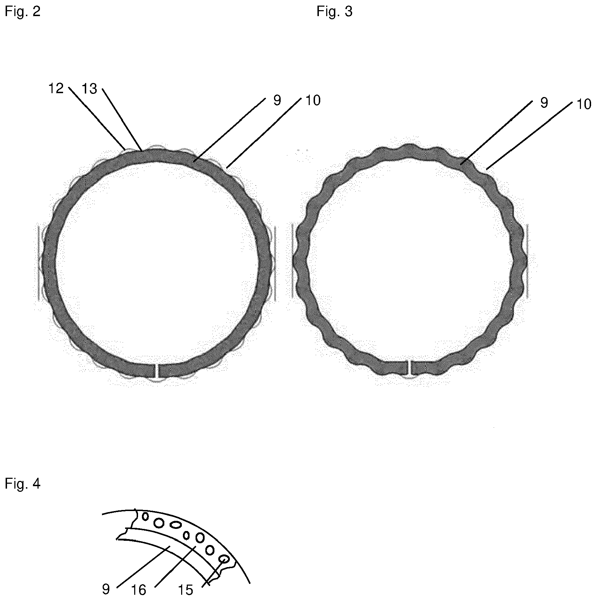

Dabei weist der Elektromagnet (2) einen dritten Druckraum (7) auf, der hohlzylindrisch ist und innen an der Zylinderfläche mit einer Membran (9) ausgekleidet ist, die von einer Abstützung (10) mindestens teilweise umfasst ist.
Die Abstützung (10) ist in dem Elektromagneten (2) gelagert und
- besteht aus einem Schaumkörper (16) gemäß Fig. 4, der eine Mehrzahl von Hohlräumen (15) aufweist, die elastisch komprimierbar sind,
- und/oder weist Vertiefungen (12) gemäß Fig. 2 und Fig. 3 auf, die von der Membran (9) und/oder dem Schaumkörper (16) druckabhängig elastisch ausfüllbar sind.

Die Lagerung der Abstützung erfolgt vorzugsweise in einer Kunststoffumspritzung einer Magnetspule, wobei beides Teile des Elektromagneten (2) sind.

Der dritte in dem Elektromagneten (2) enthaltene Druckraum (7) ist mit dem zweiten Druckraum (6) durch eine Abflachung (25) an dem Anker (20) fluidisch verbunden.

Das Fluidsteuermittel (8) enthält einen Ventilsitz (19) und einen darin zeitweise ruhenden Dichtkörper (18), wobei der Dichtkörper (18) kraft- oder form- oder stoffschlüssig mit dem Anker (20) verbunden ist.

Bei einer Druckdifferenz zwischen dem ersten Druckraum (5) und dem zweiten Druckraum (6), die höher ist als ein vorbestimmter Grenzwert Δ_{pg}, ist das Fluidsteuermittel (8) durch die genannte Druckdifferenz gegen die Kraft eines auf den Anker (20) wirkenden Federmittels (14) öffenbar, so dass das Fluid aus dem ersten Druckraum (5) in den zweiten Druckraum (6) abfließen kann.

Gemäß Fig. 2 und Fig. 3 weist eine Abstützung (10) zwischen den Vertiefungen (12) Rippen (13) auf, die in axialer Richtung relativ zu dem driiten Druckraum (7) verlaufen. Die ebenfalls axial verlaufenden Vertiefungen (12) sind miteinander und mit der Umgebung (23) außerhalb des Gehäuses (11) fluidisch verbunden, wobei die Membran (9) den dritten Druckraum (7) gegen die Umgebung (23) abdichtet.

Dabei zeigt Fig. 3 das Eindringen der Membran (9) in die Vertiefungen (12) der Abstützung (10) unter der Wirkung eines hohen Drucks im dritten Druckraum (7).

Fig. 4 zeigt einen Teil der Membran (9) und einen Teil einer Abstützung (10), die aus einem Schaumkörper (16) mit elastisch komprimierbaren Hohlräumen (15) besteht. In dieser Ausführung sind die Membran (9) und die Abstützung (10) so ausgelegt, dass auch bei dem höchsten erwartbaren Druck im Fluid des dritten Druckraums (7) die Membran (9) und die Abstützung (10) nur elastisch verformt werden.

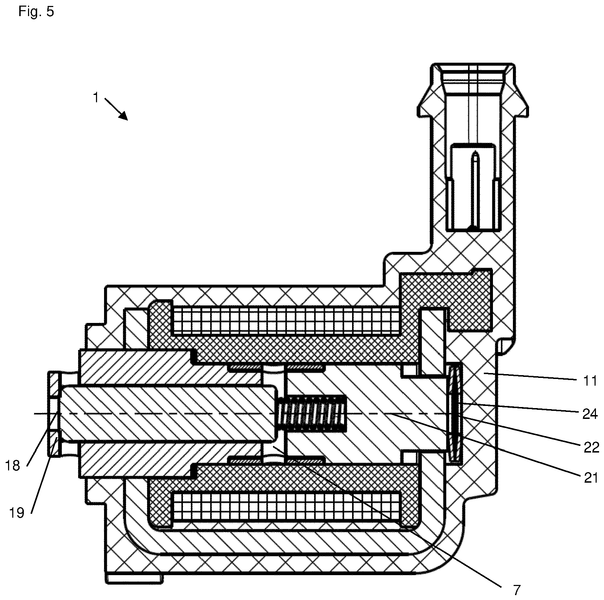

In einer Ausführung gemäß Fig. 5 weist der Elektromagnet (2) einen Magnetpol (21) auf, der von einem zweiten Federmittel (22) axial abgestützt ist, wobei der Magnetpol (21) durch einen Druck in dem dritten Druckraum (7), der größer ist als ein zweiter vorbestimmter Grenzdruck p_{g2}, gegen die Kraft des zweiten Federmittels (22) in die Richtung des zweiten Federmittels (22) verschiebbar ist.

Das zweite Federmittel (22) ist an dem Gehäuse (11) abgestützt, und ein Raum (24) auf der von dem Fluidsteuermittel (8) abgewandten Seite des Magnetpols (21) ist mit der Umgebung (23) des Ventils (1) fluidisch verbunden.

Das zweite Federmittel (22) besteht gemäß Fig. 5 aus zwei Tellerfedern, die in nicht dargestellter Weise durch Unterlegscheiben hinsichtlich ihrer Federvorspannung einstellbar sein können.

Die Membran (9) und die Abstützung (10) werden in Fig. 5 nicht gezeigt.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Ventil
- 2: Elektromagnet
- 3: Einlass
- 4: Auslass
- 5: Erster Druckraum
- 6: Zweiter Druckraum
- 7: Dritter Druckraum
- 8: Fluidsteuermittel
- 9: Membran
- 10: Abstützung
- 11: Gehäuse
- 12: Vertiefung
- 13: Rippe
- 14: Federmittel
- 15: Hohlraum
- 16: Schaumkörper
- 18: Dichtkörper
- 19: Ventilsitz
- 20: Anker
- 21: Magnetpol
- 22: Federmittel
- 23: Umgebung
- 24: Raum
- 25: Abflachung

## Patentansprüche

1. Ventil (1), aufweisend einen Elektromagneten (2), einen Einlass (3), einen Auslass (4), ein Gehäuse (11) und ein von einem Anker (20) des Elektromagneten (2) mechanisch betätigtes Fluidsteuermittel (8), das einen mit dem Einlass (3) fluidisch verbundenen ersten Druckraum (5) mit einem zweiten, mit dem Auslass (4) fluidisch verbundenen Druckraum (6) in Abhängigkeit von der Betätigung durch den Anker (20) des Elektromagneten (2) fluidisch verbindet, wobei der Elektromagnet (2) einen dritten Druckraum (7) aufweist, wobei
der dritte Druckraum (7) hohlzylindrisch ist und innen an seiner Zylinderfläche mit einer Membran (9) ausgekleidet ist, die von einer Abstützung (10) mindestens teilweise umfasst ist, wobei die Abstützung (10) in dem Elektromagneten (2) gelagert ist, und wobei die Abstützung (10) mittels ihrer Form und/oder mittels ihrer begrenzten Elastizität die Formänderungen der Membran (9) bei betrieblich auftretenden Drücken in dem dritten Druckraum (7) auf elastische Formänderungen beschränkt, **dadurch gekennzeichnet, dass** der Elektromagnet (2) einen Magnetpol (21) aufweist, der mit dem Anker (20) magnetisch zusammenwirkt, wobei der Magnetpol (21) von einem zweiten Federmittel (22) axial abgestützt ist, und wobei der Magnetpol (21) durch einen Druck in dem dritten Druckraum (7), der größer ist als ein zweiter vorbestimmter Grenzdruck p_{g2}, gegen die Kraft eines zweiten Federmittels (22) in die Richtung des zweiten Federmittels (22) elastisch verschiebbar ist.

2. Ventil (1) nach Anspruch 1, **dadurch gekennzeichnet, dass** die Abstützung (10) einen Schaumkörper (16) aufweist, der eine Mehrzahl von Hohlräumen (15) enthält, die elastisch komprimierbar sind.

3. Ventil (1) nach Anspruch 1 oder 2, **dadurch gekennzeichnet, dass** die Abstützung (10) einen hohlzylindrischen Körper mit inneren Vertiefungen (12) aufweist, die von der Membran (9) und/oder dem Schaumkörper (16) druckabhängig elastisch ausfüllbar sind.

4. Ventil (1) nach Anspruch 3, **dadurch gekennzeichnet, dass** die Abstützung (10) zwischen den Vertiefungen (12) Rippen (13) aufweist, die in axialer Richtung relativ zu dem dritten Druckraum (7) verlaufen und dass die ebenfalls axial verlaufenden Vertiefungen (12) miteinander und mit der Umgebung (23) außerhalb des Gehäuses (11) fluidisch verbunden sind, wobei die Membran (9) den dritten Druckraum (7) gegen die Umgebung (23) abdichtet.

5. Ventil (1) nach Anspruch 3, **dadurch gekennzeichnet, dass** die Abstützung (10) zwischen den Vertiefungen Rippen (13) aufweist, die relativ zu dem Druckraum (7) umlaufend verlaufen und dass die ebenfalls umlaufend verlaufenden Vertiefungen (12) miteinander und mit der Umgebung (23) außerhalb des Gehäuses (11) fluidisch verbunden sind, wobei die Membran (9) den Druckraum (7) gegen die Umgebung (23) abdichtet.

6. Ventil (1) nach einem der vorstehenden Ansprüche, **dadurch gekennzeichnet, dass** der dritte in dem Elektromagneten (2) enthaltene Druckraum (7) mit dem zweiten Druckraum (6) durch eine Abflachung (25) an dem Anker (20) oder durch eine Nut in dem Anker (20) fluidisch verbunden ist.

7. Ventil (1) nach einem der vorstehenden Ansprüche, **dadurch gekennzeichnet, dass** das Fluidsteuermittel (8) einen Ventilsitz (19) und einen darin zeitweise ruhenden Dichtkörper (18) enthält, wobei der Dichtkörper (18) kraft- oder form- oder stoffschlüssig mit dem Anker (20) verbunden ist.

8. Ventil (1) nach Anspruch 6 oder 7, **dadurch gekennzeichnet, dass** bei einer Druckdifferenz zwischen dem ersten Druckraum (5) und dem zweiten Druckraum (6), die höher ist als ein vorbestimmter Grenzwert Δ_{pg}, das Fluidsteuermittel (8) durch die genannte Druckdifferenz gegen die Kraft eines Federmittels (14) öffenbar ist, so dass das Fluid aus dem ersten Druckraum (5) in den zweiten Druckraum (6) abfließen kann.

9. Ventil (1) nach Anspruch 1, **dadurch gekennzeichnet, dass** das zweite Federmittel (22) an dem Gehäuse (11) abgestützt ist, und dass ein Raum (24) auf der von dem Fluidsteuermittel (8) abgewandten Seite des Magnetpols (21) mit der Umgebung (23) des Ventils (1) fluidisch verbunden ist.

10. Ventil (1) nach Anspruch 1 oder 9, **dadurch gekennzeichnet, dass** das zweite Federmittel (22) aus mindestens einer Tellerfeder besteht.

11. Ventil (1) nach Anspruch 10, **dadurch gekennzeichnet, dass** das mindestens eine Federmittel (22) hinsichtlich seiner Federvorspannung einstellbar ist.

## Claims

1. Valve (1) having an electromagnet (2), having an inlet (3), having an outlet (4), having a housing (11), and having a fluid control means (8) which is actuated mechanically by an armature (20) of the electromagnet (2) and, in manner dependent on the actuation by the armature (20) of the electromagnet (2), fluidically connects a first pressure space (5), which is connected fluidically to the inlet (3), to a second pressure space (6), which is connected fluidically to the outlet (4), wherein the electromagnet (2) has a third pressure space (7), wherein
the third pressure space (7) is of hollow-cylindrical form and is lined with a diaphragm (9) at the inside on its cylinder surface, said diaphragm being surrounded at least partially by a support (10), wherein the support (10) is mounted in the electromagnet (2), and wherein the support (10), by means of its shape and/or by means of its limited elasticity, limits the changes in shape of the diaphragm (9) at pressures in the third pressure space (7) that occur during operation to elastic changes in shape, **characterized in that** the electromagnet (2) has a magnet pole (21) which magnetically interacts with the armature (20), wherein the magnet pole (21) is supported axially by a second spring means (22), and wherein the magnet pole (21) is elastically displaceable in the direction of a second spring means (22) counter to the force of the second spring means (22) by way of a pressure in the third pressure space (7) that is greater than a second predetermined limit pressure p_{g2}.

2. Valve (1) according to Claim 1, **characterized in that** the support (10) has a foam body (16) which contains a plurality of cavities (15) which are elastically compressible.

3. Valve (1) according to Claim 1 or 2, **characterized in that** the support (10) has a hollow-cylindrical body with inner depressions (12) which are able to be filled elastically in a pressure-dependent manner by the diaphragm (9) and/or the foam body (16).

4. Valve (1) according to Claim 3, **characterized in that**, between the depressions (12), the support (10) has ribs (13) which extend in an axial direction relative to the third pressure space (7), and **in that** the likewise axially extending depressions (12) are connected fluidically to one another and to the surroundings (23) outside the housing (11), wherein the diaphragm (9) seals off the third pressure space (7) with respect to the surroundings (23).

5. Valve (1) according to Claim 3, **characterized in that**, between the depressions, the support (10) has ribs (13) which extend circumferentially relative to the pressure space (7), and **in that** the likewise circumferentially extending depressions (12) are connected fluidically to one another and to the surroundings (23) outside the housing (11), wherein the diaphragm (9) seals off the pressure space (7) with respect to the surroundings (23).

6. Valve (1) according to one of the preceding claims, **characterized in that** the third pressure space (7), which is contained in the electromagnet (2), is connected fluidically to the second pressure space (6) by way of a flattened portion (25) on the armature (20) or by a groove in the armature (20).

7. Valve (1) according to one of the preceding claims, **characterized in that** the fluid control means (8) contains a valve seat (19) and a sealing body (18) which rests intermittently therein, wherein the sealing body (18) is connected in a force-fitting or form-fitting or materially bonded manner to the armature (20).

8. Valve (1) according to Claim 6 or 7, **characterized in that**, for a pressure difference between the first pressure space (5) and the second pressure space (6) that is greater than a predetermined limit value Δ_{pg}, the fluid control means (8) is able to be opened counter to the force of a spring means (14) by way of the stated pressure difference, with the result that the fluid can flow off into the second pressure space (6) from the first pressure space (5).

9. Valve (1) according to Claim 1, **characterized in that** the second spring means (22) is supported against the housing (11), and **in that** a space (24) on that side of the magnet pole (21) which faces away from the fluid control means (8) is connected fluidically to the surroundings (23) of the valve (1) .

10. Valve (1) according to Claim 1 or 9, **characterized in that** the second spring means (22) consists of at least one disc spring.

11. Valve (1) according to Claim 10, **characterized in that** the at least one spring means (22) is adjustable with regard to its spring preload.

## Revendications

1. Vanne (1), comportant un électroaimant (2), une entrée (3), une sortie (4), un boîtier (11) et un moyen de commande fluidique (8) qui est actionné mécaniquement par un induit (20) de l'électroaimant (2) et qui relie fluidiquement une première chambre de pression (5), reliée fluidiquement à l'entrée (3), à une deuxième chambre de pression (6), reliée fluidiquement à la sortie (4), en fonction de l'actionnement par l'induit (20) de l'électroaimant (2), l'électroaimant (2) comportant une troisième chambre de pression (7), la troisième chambre de pression (7) étant en forme de cylindre creux et étant revêtue à l'intérieur, sur sa surface de cylindre, d'une membrane (9) qui est au moins partiellement entourée par un support (10), le support (10) étant monté dans l'électroaimant (2), et le support (10) limitant par sa forme et/ou par son élasticité limitée les variations de forme de la membrane (9) à des variation de forme élastiques en cas de pressions de service dans la troisième chambre de pression (7), **caractérisée en ce que** l'électroaimant (2) comporte un pôle magnétique (21) qui coopère magnétiquement avec l'induit (20), le pôle magnétique (21) étant supporté axialement par un deuxième moyen à ressort (22), et le pôle magnétique (21) pouvant coulisser élastiquement en direction d'un deuxième moyen à ressort (22) en s'opposant à la force du deuxième moyen à ressort (22) par une pression régnant dans la troisième chambre de pression (7) et supérieure à une deuxième pression limite prédéterminée p_{g2}.

2. Vanne (1) selon la revendication 1, **caractérisée en ce que** le support (10) comporte un corps alvéolaire (16) qui contient une pluralité de cavités (15) qui sont compressibles élastiquement.

3. Vanne (1) selon la revendication 1 ou 2, **caractérisée en ce que** le support (10) comporte un corps cylindrique creux pourvu de dépressions internes (12) qui peuvent être remplies élastiquement par la membrane (9) et/ou le corps alvéolaire (16) en fonction de la pression.

4. Vanne (1) selon la revendication 3, **caractérisée en ce que** le support (10) comporte entre les dépressions (12) des nervures (13) qui s'étendent dans la direction axiale par rapport à la troisième chambre de pression (7) et **en ce que** les dépressions (12), s'étendant également axialement, sont reliées fluidiquement les unes aux autres et à l'environnement (23) à l'extérieur du boîtier (11), la membrane (9) scellant la troisième chambre de pression (7) vis-à-vis de l'environnement (23).

5. Vanne (1) selon la revendication 3, **caractérisée en ce que** le support (10) comporte entre les dépressions des nervures (13) qui s'étendent circonférentiellement par rapport à la chambre de pression (7) et **en ce que** les dépressions (12) s'étendent également circonférentiellement et sont reliées fluidiquement les unes aux autres et à l'environnement (23) à l'extérieur du boîtier (11), la membrane (9) scellant la chambre de pression (7) vis-à-vis de l'environnement (23).

6. Vanne (1) selon l'une des revendications précédentes, **caractérisée en ce que** la troisième chambre de pression (7) contenue dans l'électroaimant (2) est reliée fluidiquement à la deuxième chambre de pression (6) par un méplat (25) situé au niveau de l'induit (20) ou par une rainure ménagée dans l'induit (20) .

7. Vanne (1) selon l'une des revendications précédentes, **caractérisée en ce que** le moyen de commande fluidique (8) contient un siège de vanne (19) et un corps d'étanchéité (18) temporairement au repos à l'intérieur, le corps d'étanchéité (18) étant relié à l'induit (20) par une liaison de matière ou en force ou par complémentarité de formes.

8. Vanne (1) selon la revendication 6 ou 7, **caractérisée en ce que**, dans le cas où la différence de pression entre la première chambre de pression (5) et la deuxième chambre de pression (6) est supérieure à une valeur limite prédéterminée Δ_{pg}, le moyen de commande fluidique (8) peut être ouvert par ladite différence de pression en s'opposant à la force d'un moyen à ressort (14) de sorte que le fluide peut s'écouler de la première chambre de pression (5) dans la deuxième chambre de pression (6).

9. Vanne (1) selon la revendication 1, **caractérisée en ce que** le deuxième moyen à ressort (22) prend appui sur le boîtier (11), et **en ce qu'**un espace (24) est relié fluidiquement à l'environnement (23) de la vanne (1) du côté du pôle magnétique (21) qui est opposé au moyen de commande fluidique (8).

10. Vanne (1) selon la revendication 1 ou 9, **caractérisée en ce que** le deuxième moyen à ressort (22) comprend au moins un ressort à disque.

11. Vanne (1) selon la revendication 10, **caractérisée en ce que** l'au moins un moyen à ressort (22) est réglable en termes de précontrainte du ressort.
